# EUROPEAN PATENT APPLICATION

(11) **EP 2 141 711 A1**
(43) Date of publication of application: **06.01.2010**
(21) Application number: 07860043.4
(22) Date of filing: 25.12.2007
(51) Int. Cl.: H01G 9/008, H01G 4/228, H01G 4/245, H01G 13/00

(54) **PROCESS FOR MANUFACTURING LEAD TERMINAL FOR CAPACITOR**

(30) Priority: 30.03.2007 JP 2007093957; 22.06.2007 JP 2007164464; 11.07.2007 JP 2007181703
(71) Applicant: NIPPON CHEMI-CON CORPORATION, Tokyo 141-8605 (JP)
(72) Inventor: KUBOUCHI, Tatsuo, Tokyo 141-8605 (JP); OHTA, Makoto, Tokyo 141-8605 (JP)
(74) Representative: Staudt, Hans-Peter
(86) International application number: PCT/JP2007/074814
(87) International publication number: WO 2008/129739

(57) **Abstract**

A process for manufacturing a leadfree lead terminal for capacitor, in which whisker generation can be avoided. There is provided a process for manufacturing a lead terminal for capacitor, comprising bringing metal wire (1) furnished with metal plating layer (2) composed mainly of tin into abuttal on aluminum wire (5) and carrying out arc welding between the metal wire (1) and the aluminum wire (5), wherein portion (9) devoid of the metal plating layer is formed at one end of the metal wire (1), the one end of the metal wire (1) is brought into abuttal on one end of the aluminum wire (5) and thereafter arc welding is carried out therebetween.

## Description

### Technical Field

The present invention relates to a lead terminal for a capacitor formed by arc welding a metal wire on which a metal plating layer is formed mainly of tin to an aluminum wire connected to a capacitor element.

### Background Technology

As conventional lead terminals for electronic parts, aluminum wires to which copper coated steel wires on which a lead plating layer is formed are joined through are welding are used. However, copper coated steel wires contain lead, which is a substance which is harmful to the human body and has negative effects on the environment, and in recent years, electronic parts which do not use any lead have been developed in order to protect the environment. As in the aluminum electrolytic capacitor in Patent Document 1, for example, a copper coated steel wire plated with 100 % tin is inserted into a recesses provided at one end of an aluminum wire and joined through arc welding. In this aluminum electrolytic capacitor, an alloy layer of copper, tin and aluminum which is generated when the copper coating steel wire, the tin plating and the aluminum wire are heated is formed where the copper coating steel wire and the aluminum wire are joint.

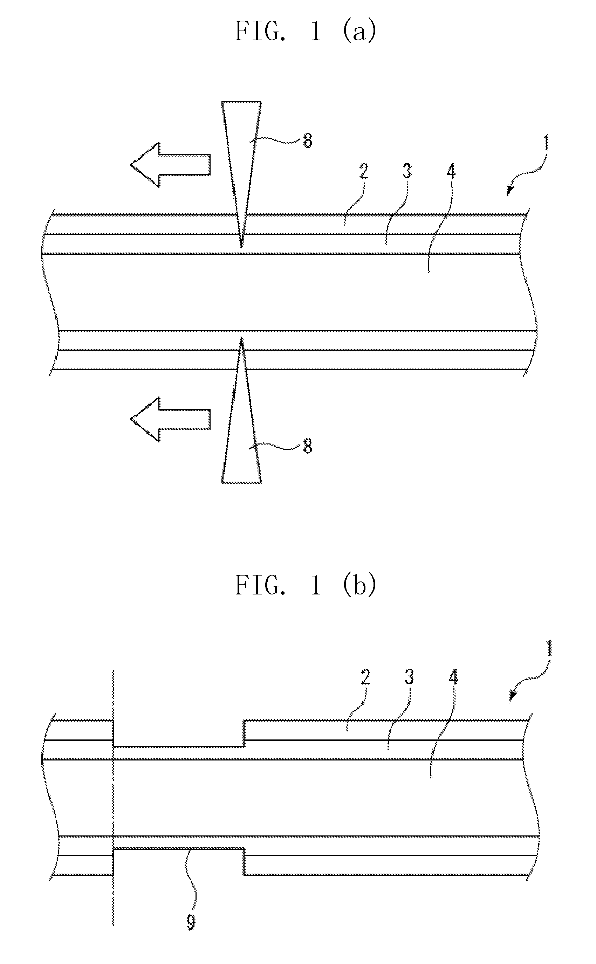

Patent Document 1: Japanese Unexamined Patent Publication 2000-124073 (page 3, FIG. 1)

### Disclosure of the Invention

### Problem to Be Solved by the Invention

In the aluminum electrolytic capacitor in Patent Document 1, the alloy layer generated where the aluminum wire and the tin plated copper coating steel wire are connected (welded together) in the lead wire using no lead contains a mixed layer of aluminum and tin, and there is a risk of tin whiskers being created due to the presence of this mixed layer. These whiskers may reach the length of 1 mm or more for a diameter of 1 µm, and there is a risk that they may short-circuit terminals in the electronic part, such as the capacitor.

The present invention is provided focusing on this problem, and an object is to provide a process for manufacturing a lead terminal for a capacitor that does not contain lead in which whiskers can be prevented from being created.

### Means for Solving Problem

In order to solve the above described problem, the process for manufacturing a lead terminal for a capacitor according to Claim 1 of the present invention is a process for manufacturing a lead terminal for a capacitor in which a metal wire on which a metal plating layer is formed mainly of tin and an aluminum wire are put in contact with each other and the above described metal wire and aluminum wire are arc welded to each other, **characterized in that**
a portion having no metal plating layer is provided at one end of the above described metal wire, and the end of the metal wire and an end of the above described aluminum wire are put in contact with each other, and thus, the above described arc welding is carried out.
According to these characteristics, the portion where the metal wire and the aluminum wire are welded together through arc welding can be formed without aluminum and tin mixing together, and thus, whiskers can be prevented from being created in the welded portion.
Here, when a portion having no metal plating layer is formed on the metal wire, the metal plating layer can be prevented from being formed in advance by means of masking, or a metal plating layer can be formed over the entire surface of the metal wire and removed through a mechanical means or the like. In particular, the metal plating layer can be removed from the surface of the metal wire without fail through a mechanical means, and therefore, no mixed layer of the metal plating layer and aluminum is formed in the welded portion, and thus, whiskers can be effectively prevented from being generated in the welded portion.

The process for manufacturing a lead terminal for a capacitor according to Claim 2 of the present invention is a process for manufacturing a lead terminal for a capacitor in which a metal wire on which a metal plating layer is formed mainly of tin and an aluminum wire are put in contact with each other and the above described metal wire and aluminum wire are are welded to each other, **characterized in that**
the metal plating layer and a portion having no metal plating layer are continuous at one end of the above described metal wire, the end of the metal wire and an end of the above described aluminum wire are put in contact with each other, and the above described arc welding is carried out.
According to these characteristics, the metal wire and the aluminum wire are put in contact via the metal plating layer when arc welding is carried out, so that a current flows in such a state that the contact resistance between the metal wire and the aluminum wire is low, and as a result, defects can be reduced during welding, and at the same time, the ratio of mixed-in tin becomes low in the portion where the metal wire and the aluminum wire are welded together through arc welding, and whiskers can be prevented from being created in the welded portion in the lead terminal.

The process for manufacturing a lead terminal according to Claim 3 of the present invention is a process for manufacturing the lead terminal for a capacitor according to Claim 1 or 2, **characterized in that** the metal plating layer provided at one end of the above described metal wire is coated with a welded portion formed through the above described arc welding.
According to these characteristics, the metal plating layer provided at one end of the metal wire containing tin is buried within in the welded portion, so that no tin is mixed in in the vicinity of the surface of the welded portion and whiskers can be prevented from being generated in the welded portion in the lead terminal.

The process for manufacturing a lead terminal for a capacitor according to Claim 4 of the present invention is a process for manufacturing a lead terminal for a capacitor according to any of Claims 1 to 3, **characterized in that** the welded portion between the above described metal wire and aluminum wire does not stick out over the portion having no metal plating layer on the metal wire.
According to these characteristics, no mixed layer is formed between the metal wire and the metal plating layer in the vicinity of the surface of the welded portion, and it becomes possible to prevent whiskers.

The process for manufacturing a lead terminal for a capacitor according to Claim 5 of the present invention is the process for manufacturing a lead terminal for a capacitor according to any of Claims 1 to 4, **characterized in that** the above described metal wire has a tapered surface formed toward an end.
According to these characteristics, the metal wire is easy to press fit into the aluminum wire, and at the same time, the metal wire and the aluminum wire can be put in contact without fail, and thus, it becomes possible to generate a stable arc.

The process for manufacturing a lead terminal for a capacitor according to Claim 6 of the present invention is the process for manufacturing a lead terminal for a capacitor according to any of Claims 1 to 5, **characterized in that** a recess is provided on the surface at one end of the above described aluminum wire and the metal wire is put in contact within the recess.
According to these characteristics, the recess can guide the metal wire into the aluminum wire with high precision, and thus, the welding can be stabilized.

The process for manufacturing a lead terminal for a capacitor according to Claim 7 of the present invention is the process for manufacturing a lead terminal for a capacitor according to any of Claims 1 to 6, **characterized in that** the welded portion between the metal wire and the aluminum wire is made into a desired form using a die when the above described arc welding is carried out.
Though there is almost no metal plating layers on the surface in the welded portion of the metal wire and the wettability on the surface lowers, and therefore, the melted portion of the aluminum wire does not move along the surface of the metal wire at the time of welding, and in some cases the welded portion cannot be made into a stable form, according to these characteristics the portion where the metal wire and the aluminum wire are welded together is formed with a die, so that the welded portion can be formed stably in a desired form, and the physical strength of the welded portion can be increased in the lead terminal.

The process for manufacturing a lead terminal for a capacitor according to Claim 8 of the present invention is the process for manufacturing a lead terminal for a capacitor according to Claim 7, **characterized in that** the above described die is provided in the chuck for holding the above described metal wire.
According to these characteristics, the work for maintaining the metal wire and the work for providing a die can be carried out simultaneously at the time of manufacture of a lead terminal, and at the same time, the lead terminal can be used as a tool for conduction at the time of are welding, and thus, the work for arc welding can be carried out rapidly.

The process for manufacturing a lead terminal for a capacitor according to Claim 9 of the present invention is the process for manufacturing a lead terminal for a capacitor according to Claim 1, **characterized in that** the welded portion between the metal wire and the aluminum wire is made into a desired form using a die when the above described arc welding is carried out, and the above described die is provided so as to cover the above described portion having no metal plating layer, so that the welded portion formed through the above described arc welding and the above described metal plating layer are separated from each other by means of the die.
According to these characteristics, tin in the metal plating layer an be prevented from getting mixed in with the welded portion that is melted through are welding, tin can be prevented from getting mixed in with the welded portion, and whiskers can be prevented from being generated in the welded portion in the lead terminal.

### Brief Description of the Drawings

FIG. 1A is a schematic cross sectional diagram showing the step of removing the tin plating layer formed on the surface of the metal wire according to the first embodiment, and FIG. 1B is a schematic cross sectional diagram showing a metal wire from which the tin plating layer has been removed;

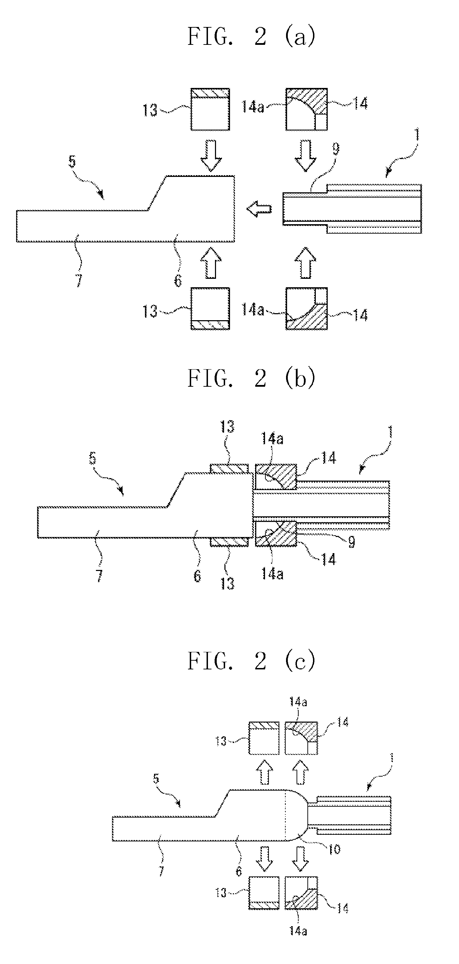

FIG. 2A is a schematic cross sectional diagram showing a state where a metal wire and an aluminum wire are welded together, FIG. 2B is a schematic cross sectional diagram showing the state when the metal wire and the aluminum wire are being welded, and FIG. 2C is a schematic cross sectional diagram showing the state after the metal wire and the aluminum wire are melted;

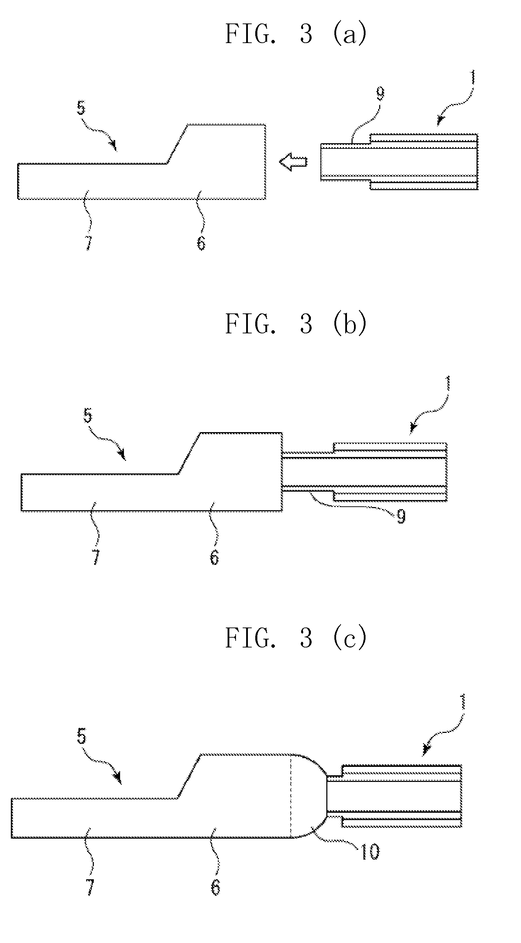

FIG. 3A is a schematic cross sectional diagram showing the state before the metal wire and the aluminum wire are welded together in a modification, FIG. 3B is a schematic cross sectional diagram showing the state when the metal wire and the aluminum wire are being welded, and
FIG. 3C is a schematic cross sectional diagram showing the state after the metal wire and the aluminum wire are welded together;

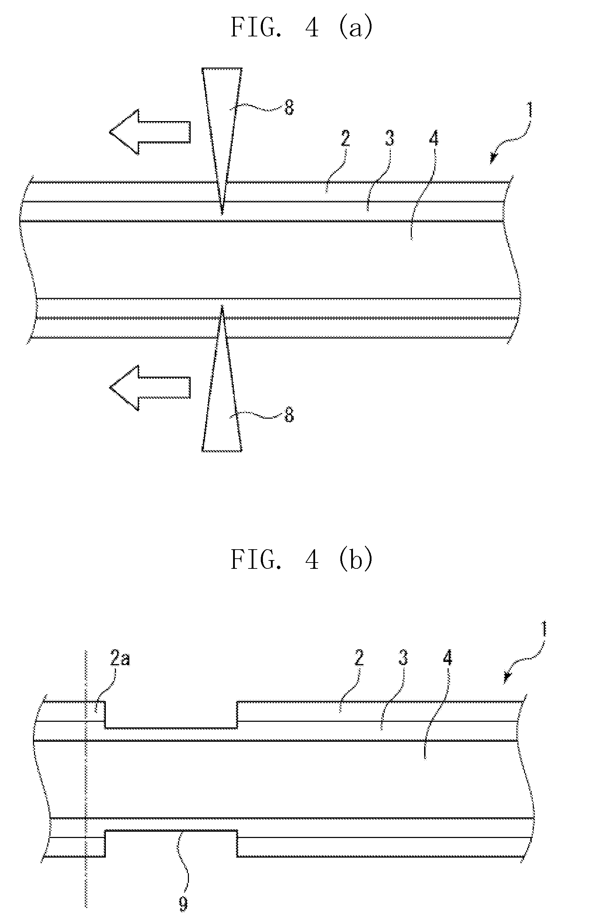

FIG. 4A is a schematic cross sectional diagram showing the step of removing the tin plating layer from the surface of metal wire according to the second embodiment, and FIG. 4B is a schematic cross sectional diagram showing the metal wire from which the tin plating layer has been removed;

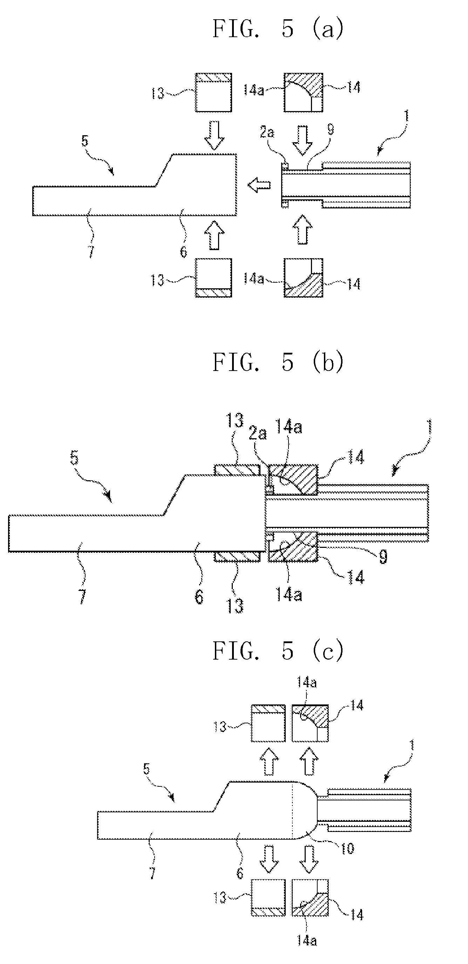

FIG. 5A is a schematic cross sectional diagram showing the state before the metal wire and the aluminum wire are welded together, FIG. 5B is a schematic cross sectional diagram showing the state when the metal wire and the aluminum wire are being welded, and Fig 5C is a schematic cross sectional diagram showing the state after the metal wire and the aluminum wire are welded together;

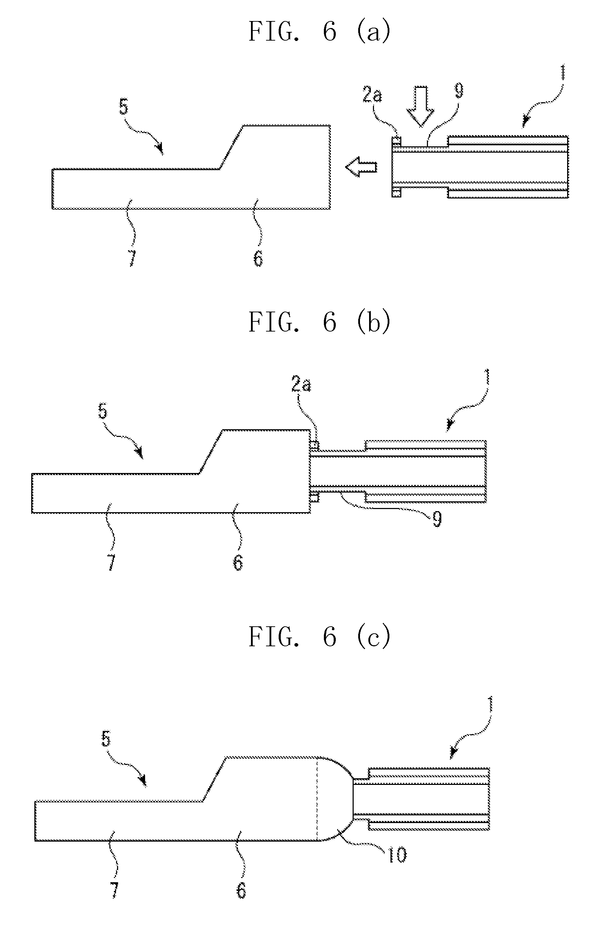

FIG. 6A is a schematic cross sectional diagram showing the state before the metal wire and the aluminum wire are welded together in a modification, FIG. 6B is a schematic cross sectional diagram showing the state when the metal wire and the aluminum wire are being welded together, and FIG. 6C is a schematic cross sectional diagram showing the state after the metal wire and the aluminum wire are welded together;

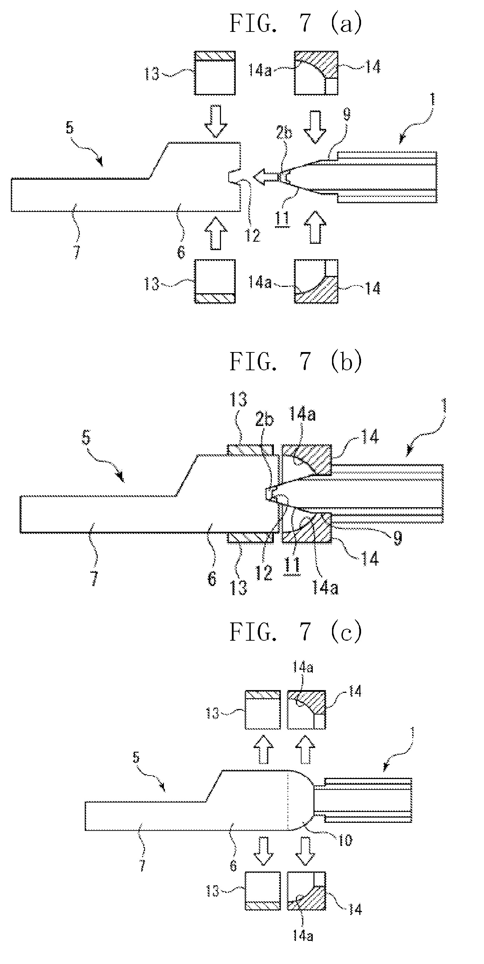

FIG. 7A is a schematic cross sectional diagram showing the state before the metal wire and the aluminum wire are welded together according to the third embodiment, FIG. 7B is a schematic cross sectional diagram showing the state when the metal wire and the aluminum wire are being welded together, and FIG. 7C is a schematic cross sectional diagram showing the state after the metal wire and the aluminum wire are welded together; and

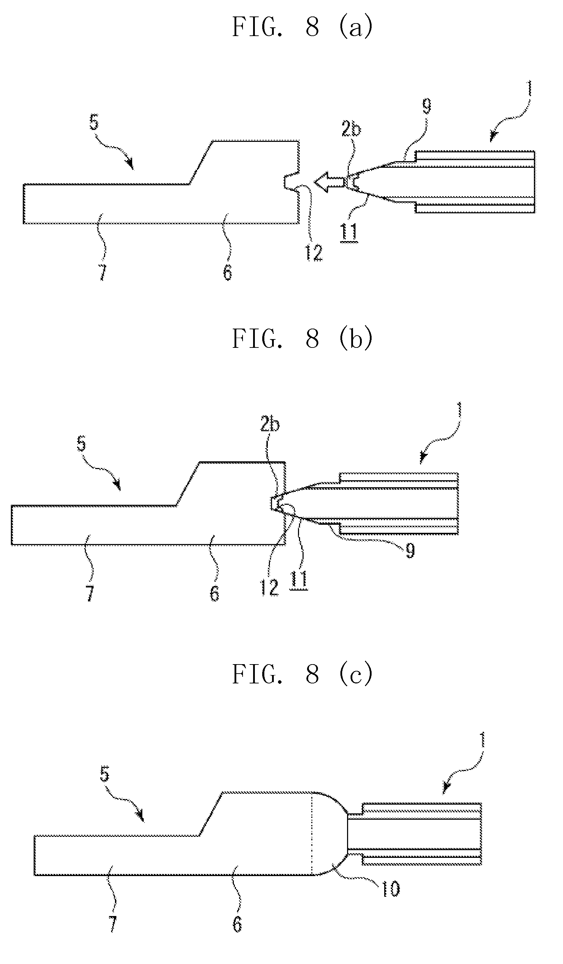

FIG. 8A is a schematic cross sectional diagram showing the state before the metal wire and the aluminum wire are welded together in a modification; FIG.8B is a schematic cross sectional diagram showing the state when the metal wire and the aluminum wire are being welded together, and FIG. 8C is a schematic cross sectional diagram showing the state after the metal wire and the aluminum wire are welded together.

### Explanation of Symbols

- 1: metal wire
- 2: tin plating layer (metal plating layer)
- 2a, 2b: tin plating portion (metal plating layer)
- 3: copper coating layer
- 4: steel wire
- 5: aluminum wire
- 6: round rod portion
- 7: flat portion
- 8: cutter
- 9: portion having no tin plating layer (portion having no metal plating layer)
- 10: welded portion
- 11: tapered surface
- 12: recess
- 13: fixed chuck
- 14: movable chuck
- 14a: die portion

### Best Mode for Carrying Out the Invention

The process for manufacturing a lead terminal for a capacitor according to the best mode of the present invention is described below on the basis of the embodiments.

### First Embodiment

The first embodiment of the present invention is described below in reference to the drawings. First, FIG. 1A is a schematic cross sectional diagram showing the step of removing the tin plating layer from the surface of the metal wire according to the first embodiment, FIG. 1B is a schematic cross sectional diagram showing the metal wire from which the tin plating layer has been removed, FIG. 2A is a schematic cross sectional diagram showing the state before the metal wire and the aluminum wire are welded together, FIG. 2B is a schematic cross sectional diagram showing the state when the metal wire and the aluminum wire are being welded together, FIG. 2C is a schematic cross sectional diagram showing the state after the metal wire and the aluminum wire are welded together, FIG. 3A is a schematic cross sectional diagram showing the state before the metal wire and the aluminum wire are welded together in a modification, FIG. 3B is a schematic cross sectional diagram showing the state when the metal wire and the aluminum wire are being welded together, and FIG. 3C is a schematic cross sectional diagram showing the state after the metal wire and the aluminum wire are welded together.

As the capacitor in the present embodiment, an electrolytic capacitor is cited and described. In this electrolytic capacitor, a capacitor element made of a number of electrode foils formed of aluminum that are wound or layered with separators in between is contained in an exterior case in cylindrical form with a bottom, together with an electrolytic liquid, an opening created in this exterior case is sealed with a sealing body, and lead terminals guided from the capacitor element penetrate through the sealing body and lead to the outside.

The lead terminals are formed of an aluminum wire 5 which is connected to the capacitor element and a metal wire 1 (CP wire) having a soft steel wire 4 as a core (see FIG. 2C). As shown in FIG. 1A, the metal wire 1 is provided by providing a soft steel wire 4 as a core, forming a copper coating layer 3 by thickly plating copper, which is a metal material, around the core, and forming a tin plating layer 2 made of 100 % tin, which is also a metal material, around the copper coating layer. No lead is used whatsoever in the materials that form the metal wire 1, and no lead is used in the materials that form the aluminum wire 5 and the capacitor element, and thus the aluminum electrolytic capacitor according to the present embodiment is a lead-free electronic part and includes no lead, and does not have negative effects on the environment.

As shown in FIG. 1A, the metal wire 1 is formed by cutting a body in rod form into a number of pieces. Here, the tin plating layer 2 is removed from the surface of the metal wire 1 in the end portion of the metal wire 1 through a mechanical means, such as a cutter 8, so that a number of portions having no tin plating layer are created in the body in rod form 9. The body in rod form is cut at an end of the portions having no tin plating layer 9 (see single-dot chain line in FIG. 1B, so that a metal wire 1 where a portion having no tin plating layer 9 is formed at the end is formed. In the present embodiment, a cutter 8 is pressed into the copper coating layer 3 through the tin plating layer 2, and the cutter 8 is moved in the direction of the arrows, and thus, as shown in FIG. 1B, the tin plating layer 2 and the copper coating layer 3 are partially removed, so that a portion having no tin plating layer 9 is created. Here, though it is also possible to remove the entire copper coating layer 3 so that the soft steel wire 4 is exposed from the surface, it can be arc welded to the below described aluminum wire 5 with higher precision when part of the copper coating wire 3 remains. Alternatively, the tin plating layer 2 may be removed through polishing or cutting. It is preferable for the tin plating layer 2 to be removed so that the portion having no tin plating layer 9 is not included in the portion 10 where it is welded to the below described aluminum wire 5, and 1.5 mm to 5 mm of the tin plating layer 2 may be removed at the end of the metal wire 1. Whiskers are created in the portion 10 where the metal wire 1 and the aluminum wire 5 are welded together in lead terminals for capacitors (see FIG. 2C), and this is considered to be because the tin used for metal plating and aluminum mix together at the time of welding, so that whiskers are created due to the stress on the tin. Therefore, it is necessary to remove the tin plating layer 2 in the end portion of the metal wire 1 without fail, and therefore, a mechanical means is used. However, it is more effective to remove part of the copper coating layer 3 in addition to the tin plating layer 2.

Next, a method for connecting the aluminum wire 5 and the metal wire 1 when the metal wire 1 is manufactured is described. First, as shown in FIG. 2A, a round rod portion 6 in approximately columnar form is formed at one end of the aluminum wire 5, and this round rod portion 6 is connected to the metal wire 1 in accordance with the manufacturing method according to the present invention. In addition, a flat portion 7 in approximately flat form is formed at the other end of the aluminum wire 5, and this flat portion 7 is connected to the electrode foil of the capacitor element. The aluminum wire 5 is secured in the vicinity of the end by means of a fixed chuck 13 and the metal wire 1 is held by a movable chuck 14 in the vicinity of the end, and thus, the ends at which the tin plating layer 2 is removed are positioned so as to face each other over a certain distance. In this case, an arc welding apparatus is connected to the metal wire 1 and the aluminum wire 5. Here, the fixed chuck 13 and the movable chuck 14 can be used as a tool for electrical conduction for the arc welding apparatus.

As shown in FIG. 2B, the fixed chuck 13 and the movable chuck 14, each of which is formed of to pieces, can hold the aluminum wire 5 and the metal wire 1 by sandwiching them from the top and bottom. Here, mold portions 14a in approximately hemispherical form are formed in the movable chuck 14. The movable chuck 14 holds the portion having no tin plating layer 9 in the metal wire 1 by sandwiching it and the mold portions 14a are positioned so as to cover the portion having no tin plating layer 9. Here, the portion having no tin plating layer 9 and the tin plating layer 2 are separated from each other by the mold portions 14a of the movable chuck 14.

Next, the metal wire 1 is moved toward the aluminum wire 5 by means of the movable chuck 14, so that the end of the metal wire 1 collides with the end surface of the aluminum wire 5 at a predetermined point and makes contact with the end surface. In the case where the welding apparatus operates in this state, a welding current flows between the metal wire 1 and the aluminum wire 5, and thus, an are welding current starts flowing through the point of contact between the metal wire 1 and the aluminum wire 5, that is to say, through the point of contact between the end of the metal wire 1 and the end of the aluminum wire 5.

When a space is created between the end of the metal wire 1 and the end of the aluminum wire 5 by removing the end of the metal wire 1 from the end of the aluminum wire 5 after the start of conduction of the welding current, an are is generated between the end of the metal wire 1 and the end of the aluminum wire 5, so that part of both the metal wire 1 and the facing aluminum wire 5 melts.

In this state, the metal wire 1 is moved against the end of the aluminum wire 5 so as to make contact, and further pressed against it. The melted metals fuse, so that the metal wire 1 and the end of the aluminum wire 5 are welded together. At this time, the mold portions 14a of the movable chuck 14 move toward the end of the aluminum wire 5, and therefore, the above described melted metal is molded within these mold portions 14a, so that a welded portion 10 in hemispherical form is formed, and thus, as shown in FIG. 2C, a lead terminal where the metal wire 1 and the aluminum wire 5 are integrated is formed. In this case, the melted portion 10 forms an alloy layer through the fusion of the metal that forms the metal wire 1 and the metal that forms the aluminum wire 5. The tin plating layer 2 is removed from the surface of the metal wire 1 in advance, and therefore, the welded portion 10 has no tin plating layer 2 mixed in. Accordingly, whiskers can be prevented from being created as a result of a mixed layer of the tin plating layer 2 and aluminum. Here, in order to prevent the tin plating layer 2 from mixing into the welded portion 10 without fail, the length of the portion having no tin plating layer 9 which is exposed after the metal wire 1 and the aluminum wire 5 are welded together is limited to 2 mm or less, preferably 1.5 mm or less. In addition, the exposed portion having no tin plating layer 9 may be coated with an insulating resin layer, such as of PP, PET PPS or a fluorine resin, or the tin plating layer 2 on the metal wire 1 is rolled out so as to coat the exposed portion having no tin plating layer 9, so that the portion having no tin plating layer 9 can be prevented from being oxidized in the air.

As shown in the modification in FIGS. 3A to 3C, the metal wire 1 and the aluminum wire 5 may be connected through arc welding without any mold portions 14a being provided. A portion having no tin plating layer 9 is created on the metal wire 1 through a mechanical means, such as a cutter 8 (see FIG. 3A), so that the end portion of the metal wire 1 from which the tin plating layer 2 is removed is positioned so as to face the aluminum wire 5 over a certain distance. In this case, an arc welding apparatus is connected to the metal wire 1 and the aluminum wire 5.

The metal wire 1 is moved against the aluminum wire 5 so that the end portion of the metal wire 1 collides with the end surface of the aluminum wire 5 at a predetermined point, and the welding apparatus operates in a state where the two make contact with each other (see FIG. 3B). Then, the end of the metal wire 1 is moved away from the end surface of the aluminum wire 5, so that a space is created between the two, and then an arc is generated between the end of the metal wire 1 and the end surface of the aluminum wire 5, and thus, part of both the metal wire 1 and the facing aluminum wire 5 melts. In this state, the metal wire 1 is moved against the end surface of the aluminum wire so as to make contact, and when further pressed together, the melted metals fuse, so that the metal wire 1 and the surface of the aluminum wire 5 fuse together (see FIG. 3C).

As described above, in the process for manufacturing a lead terminal for a capacitor according to the present embodiment, one end of the metal wire 1 is provided with a portion having no tin plating layer 9, so that the aluminum 5 and tin do not mix together in the portion 10 where the metal wire 1 and the aluminum wire 5 are welded together through arc welding, and thus, whiskers can be prevented from being created in the welded portion 10.

The tin plating layer 2 can be removed from the surface of the metal wire 1 without fail particularly through a mechanical means, and therefore, no mixed layer of the tin plating layer 2 and aluminum 5 is formed in the welded portion 10, so that whiskers can be prevented from being created in the welded portion 10.

In addition, one end of the metal wire 1 and one end of the aluminum wire 5 are put in contact with each other and subjected to arc welding, and at the same time, the portion 10 where the metal wire 1 and the aluminum wire 5 are welded together is formed of mold portions 14a, so that a welded portion in desired form can be formed stably, and thus, the physical strength in the welded portion 10 in the lead terminal can be increased.

In addition, the mold portions 14a are provided in the movable chuck 14 for holding the metal wire 1, and thus, the work for holding the metal wire 1 and the work for placing mold portions 14a can be carried out at the same time when a lead terminal is manufactured, and at the same time, the mold portions 14a can also be used as a tool for electrical conduction at the time of arc welding, and thus, the work of arc welding can be carried out rapidly.

In addition, the mold portions 14a are provided so as to cover the portion having no tin plating layer 9, and the mold portions 14a separate the welded portion 10 formed through arc welding from the tin plating layer 2, and thus, the tin in the tin plating layer 2 can be prevented from mixing into the welded portion 10 formed through are welding, and no tin mixes into the welded portion 10 and whiskers can be prevented from being created in the welded portions 10 in the lead terminal.

### Second Embodiment.

Next, the process for manufacturing a lead terminal for a capacitor according to the second embodiment is described in reference to FIGS. 4A to 6C. Here, the same symbols are used for components that are the same as in the above described embodiment, and the descriptions thereof are not repeated. FIG. 4A is a schematic cross sectional diagram showing the step of removing the tin plating layer from the surface of the metal wire in the second embodiment, FIG. 4B is a schematic cross sectional diagram showing the metal wire from which the tin plating layer has been removed, FIG. 5A is a schematic cross sectional diagram showing the state before the metal wire and the aluminum wire are welded together, FIG. 5B is a schematic cross sectional diagram showing the state when the metal wire and the aluminum wire are being welded together, FIG. 5C is a schematic cross sectional diagram showing the state after the metal wire and the aluminum wire are welded together, FIG. 6A is a schematic cross sectional diagram showing the state before the metal wire and the aluminum wire are welded together in a modification, FIG. 6B is a schematic cross sectional diagram showing the state when the metal wire and the aluminum wire are being welded together, and FIG. 6C is a schematic cross sectional diagram showing the state after the metal wire and the aluminum wire are welded together.

A number of portions having no tin plating layer 9 are created in a body in rod form that forms the metal wire 1 using a physical means, such as a cutter 8 (see FIG. 4A), and the body in rod form is cut in the portion having the metal plating layer 2 adjacent to a portion having no tin placing layer 9, and thus, a metal wire 1 with a portion having no tin placing layer 9 is formed with a tin plating portion 2a remaining on the surface in the vicinity of the end of the metal wire 1 (see FIG. 4B), as in the first embodiment. Next, as shown in FIG. 5A, the aluminum wire 5 is secured by a fixed chuck 13 and the metal wire 1 is held by a movable chuck 14, and thus, end portions where part of the tin plating portion 2a remains are positioned so as to face each other over a certain distance from each other. In this case, an arc welding apparatus is connected to the metal wire 1 and the aluminum wire 5.

As shown in FIG. 5B, the fixed chuck 13 and the movable chuck 14 hold the aluminum wire 5 and the metal wire 1, respectively, by sandwiching them from the top and bottom. Here, mold portions 14a in approximately hemispherical form are created in the movable chuck 14. The movable chuck 14 holds the portion having no tin plating layer 9 in the metal wire 1 by sandwiching it, so that the mold portions 14a are positioned so as to cover the portion having no tin plating layer 9. Here, the mold portions 14a of the movable chuck 14 separate the portion having no tin plating layer 9 from the tin plating layer 2.

Next, the metal wire 1 is moved against the aluminum wire 5 by means of the movable chuck, so that the end of the metal wire 1 collides with the end surface of the aluminum wire 5 at a predetermined point and makes contact. Here, the tin plating portion 2a remaining on the surface of the metal wire 1 makes contact with the aluminum wire, and when the welding apparatus operates in this state, a welding currant flows through the area where the metal wire 1 and the aluminum wire 5 make contact, and in particular, the metal wire 1 and the aluminum wire 5 are in a conductive state via the above described tin plating portion 2a remaining on the surface, so that an are welding current starts flowing. After that, the end of the metal wire 1 is moved away from the end surface of the aluminum wire 5 so that a space is provided between the two, and then an arc is generated between the end of the metal wire 1 and the end surface of the aluminum wire 5, so that part of both the metal wire 1 and the facing aluminum wire 5 melts.

When the metal wire 1 is moved against the end surface of the aluminum wire 5 so as to make contact in this state and the two are further pressed together, the melted metals fuse, and the metal wire 1 and the end surface of the aluminum wire 5 fuse together. At this time, the mold portions 14a in the movable chuck 14 move toward the end surface of the aluminum wire 5, and thus, the above described melted metal is molded inside the mold portions 14a, so that a welded portion 10 in hemispherical form is formed, and as shown in FIG. 5C, a lead terminal where the metal wire 1 and the aluminum wire 5 are integrated is formed. As in the above described first embodiment, the tin plating layer 2 is removed from the welded portion 10 in advance, except in the portion which remains on the surface of the metal wire 1, and therefore, the welded portion 10 has almost no tin plating layer 2 mixed in. In addition, the part of the tin plating portion 2a that remains on the surface of the above described metal layer 1 is buried in the aluminum wire 5 at the time of welding, and therefore, there is no tin plating layer 2 in the vicinity of the surface of the welded portion, and accordingly, whiskers can be prevented from being created from the mixed layer of the tin plating layer 2 and aluminum.

As in the modification in FIGS. 6A to 6C, the metal wire 1 and the aluminum wire 5 may be connected through arc welding without any mold portions 14a being provided. A metal wire 1 with a portion having no tin plating layer 9 is formed through a mechanical means, such as a cutter 8, so that a tin plating portion 2a remains on the surface in the vicinity of the end of the metal wire 1 (see FIG. 6A), and the end portion of the metal wire 1 from which the tin plating layer 2 is removed is positioned so as to face the aluminum wire 5 over a certain distance. In this case, an are welding apparatus is connected to the metal wire 1 and the aluminum wire 5.

The metal wire 1 is moved against the aluminum wire 5 so that the end portion collides with the end surface of the aluminum wire 5 at a predetermined point and makes contact, and in this state, the welding apparatus is operated (see FIG. 6B). Then, the end of the metal wire 1 is moved away from the end surface of the aluminum wire 5 so that a space is created between the two. Then, an are is generated between the end of the metal wire 1 and the end surface of the aluminum wire 5, and part of both the metal wire 1 and the facing aluminum wire 5 melts. In this state, the metal wire 1 is moved against the end surface of the aluminum wire 5 and makes contact and the two are further pressed together, and thus, the melted metals fuse together, and the metal wire 1 and the end surface of the aluminum wire 5 are welded together (see FIG. 6C).

### Third Embodiment

Next, the process for manufacturing a lead terminal for a capacitor according to the third embodiment is described in reference to FIGS. 7A to 8C. Here, the same symbols are used for components that are the same as in the above described embodiments, and the descriptions thereof are not repeated. FIG. 7A is a schematic cross sectional diagram showing the state before the metal wire and the aluminum wire are welded together according to the third embodiment, FIG. 7B is a schematic cross sectional diagram showing the state when the metal wire and the aluminum wire are being welded together, FIG. 7C is a schematic cross sectional diagram showing the state after the metal wire and the aluminum wire are welded together, FIG. 8A is a schematic cross sectional diagram showing the state before the metal wire and the aluminum wire are welded together in a modification, FIG. 8B is a schematic cross sectional diagram showing the state when the metal wire and the aluminum wire are being welded together, and FIG. 8C is a schematic cross sectional diagram showing the state after the metal wire and the aluminum wire are welded together.

As shown in FIG. 7A, a surface 11 which tapers toward the end is formed in the metal wire 1. This tapered surface 11 is formed in the same manner as in the first embodiment, by creating a number of portions having no tin plating layer 9 in a body in rod form that forms the metal wire 1 and cutting the body in rod form in the portion with the metal plating layer 2 adjacent to the a portion having no tin plating layer 9 using a mechanical means, such as a cutter 8, so that a metal wire 1 with a tin plating portion 2b remaining on the surface in the vicinity of the end of the metal wire 1 is formed, and after that compressing the tin plating portion 2b of the metal wire 1 and the portion having no tin plating layer 9 in a mold or the like, and a tin plating portion to be made of the remaining metal plating layer is formed at the end of the tapered surface 11. However, a recess 12 having a space for containing the portion of the metal wire 1 with the above described tapered surface 11 is provided on the end surface of the aluminum wire 5 on the side which makes contact with the metal wire 1. The aluminum wire 5 is secured to a fixed chuck 13, while the metal wire 1 is held by a mobile chuck 14, and the part of the ends with tin plating portions 2b remains are positioned so as to face each other over a certain distance. In this case, an are welding apparatus is connected to the metal wire 1 and the aluminum wire 5.

As shown in FIG. 7B, the fixed chuck 13 and the movable chuck 14 hold the aluminum wire 5 and the metal wire 1, respectively, by sandwiching them from the top and bottom. Here, mold portions 14a in approximately hemispherical form are created in the movable chuck 14. The movable chuck 14 holds the portion having no tin plating layer 9 in the metal wire 1 by sandwiching it, so that the mold portions 14a are positioned so as to cover the portion having no tin plating layer 9. Here, the mold portions 14a of the movable chuck 14 separate the portion having no tin plating layer 9 from the tin plating layer 2.

Next, the metal wire 1 is moved against the aluminum wire 5 by means of the movable chuck, so that the end of the metal wire 1 collides with the end surface of the aluminum wire 5, and at this time, the metal wire 1 is guided to a predetermined point by the recess 12 in the aluminum wire 5, so that the metal wire 1 and the aluminum wire 5 make contact with each other. Here, the tin plating portion 2b remaining on the surface of the metal wire 1 makes contact with the aluminum wire, and when the welding apparatus operates in this state, a welding current flows through the area where the metal wire 1 and the aluminum wire 5 make contact, and in particular, the metal wire 1 and the aluminum wire 5 are in a conductive state via the above described tin plating portion 2b remaining on the surface, so that an arc welding current starts flowing. After that, the end of the metal wire 1 is moved away from the end surface of the aluminum wire 5 so that a space is provided between the two, and then an arc is generated between the end of the metal wire 1 and the end surface of the aluminum wire 5, so that part of both the metal wire 1 and the facing aluminum wire 5 melts.

When the metal wire 1 is moved against the end surface of the aluminum wire 5 so as to make contact in this state and the two are further pressed together, the melted metals fuse, and the metal wire 1 and the end surface of the aluminum wire 5 fuse together. At this time, the mold portions 14a in the movable chuck 14 move toward the end surface of the aluminum wire 5, and thus, the above described melted metal is molded inside the mold portions 14a, so that a welded portion 10 in hemispherical form is formed, and as shown in FIG. 7C, a lead terminal where the metal wire 1 and the aluminum wire 5 are integrated is formed. As in the above described second embodiment, the tin plating layer 2 is removed from the welded portion 10 in advance, except in the portion which remains on the surface of the metal wire 1, and therefore, the welded portion 10 has almost no tin plating layer 2 mixed in. In addition, the part of the tin plating portion 2b that remains on the surface of the above described metal layer 1 is buried in the aluminum wire 5 at the time of welding, and therefore, there is no tin plating layer 2 in the vicinity of the surface of the welded portion, and accordingly, whiskers can be prevented from being created from the mixed layer of the tin plating layer 2 and aluminum.

As in the modification in FIGS. 8A to 8C, the metal wire 1 and the aluminum wire 5 may be connected through are welding without any mold portions 14a being provided. A metal wire 1 with a portion having no tin plating layer 9 is formed through a mechanical means, such as a cutter 8, so that a tin plating portion 2b remains on the surface in the vicinity of the end of the metal wire 1, and after that, the tin plating portion 2b of the metal wire 1 and the portion having no tin plating layer 9 are compressed in a mold or the like, so that a tapered surface 11 is formed (see FIG. 8A). A tin plating portion 2b is formed of the remaining metal plating layer at the end of the tapered surface 11. In contrast, a recess 12 having a space for containing the portion of the above described metal wire 1 with the tapered surface 11 is provided in the end surface of the aluminum wire 5 on the side that makes contact with the metal wire 1. The end portion of the metal wire 1 from which the tin plating layer 2 is removed is positioned so as to face the aluminum wire 5 over a certain distance. In this case, an arc welding apparatus is connected to the metal wire 1 and the aluminum wire 5.

The metal wire 1 is moved against the aluminum wire 5 so that the end portion collides with the end surface of the aluminum wire 5 at a predetermined point and makes contact, and in this state, the welding apparatus is operated (see FIG. 8B). Then, the end of the metal wire 1 is moved away from the end surface of the aluminum wire 5 so that a space is created between the two. Then, an arc is generated between the end of the metal wire 1 and the end surface of the aluminum wire 5, and part of both the metal wire 1 and the facing aluminum wire 5 melts. In this state, the metal wire 1 is moved against the end surface of the aluminum wire 5 and makes contact and the two are further pressed together, and thus, the melted metals fuse together, and the metal wire 1 and the end surface of the aluminum wire 5 are welded together (see FIG. 8C).

As described above, in the processes for manufacturing a lead terminal for a capacitor according to the second and third embodiments, a continuous tin plating layer 2a, 2b and portion having no tin plating layer 9 are provided at an end of the metal wire 1, the end of the metal wire 1 and the end of the aluminum wire 5 are made to make contact with each other and arc welding is carried out, so that a current can flow in such a state that the contact resistance between the metal wire 1 and the aluminum wire 5 is low, and as a result, defects can be reduced during welding. Here, the ratio of tin that gets mixed in is low in the portion 10 where the metal wire 1 and the aluminum wire 5 are welded together through arc welding, and whiskers can be prevented from being created in the welded portion 10 in the lead terminal.

In addition, the portion 10 where the metal wire 1 and the aluminum wire 5 are welded together is formed so as not to stick out over the portion having no metal plating layer 9 in the metal wire 1, and thus, no mixed layer of the metal wire 1 and the metal plating layer 2 is formed in the vicinity of the surface of the welded portion 10, which makes it possible to prevent whiskers.

In addition, the tin plating portion 2a, 2b is coated with the welded portion 10 formed through are welding, so that the tin plating portion 2a, 2b containing tin is buried in the welded portion 10, and tin does not mix in in the vicinity of the welded portion 10, and thus, whiskers can be prevented from being generated in the welded portion 10 in the lead terminal.

Here, the tin plating portion 2a, 2b may be provided at the end of the metal wire 1 by plating the portion having no tin plating layer with tin.

In addition, the metal plating layer 2a provided at the end of the metal wire 2 is formed on the surface of the metal wire 1 in the above described second embodiment, and thus, the metal plating layer 2a is easy to form on the metal wire 1.

In addition, in the above described third embodiment, a surface 11 that tapers toward the end of the metal wire 1 is formed, so that the metal wire 1 is easy to press fit into the aluminum wire 5, and at the same time, the metal wire and the aluminum wire can be put in contact without fail, and thus, it is possible to generate a stable arc.

In addition, in the above described third embodiment, a recess 12 is provided in one end surface of the aluminum wire 5, and the metal wire 1 is put in contact within the recess 12, and thus, the recess 12 guides the metal wire 1 to the aluminum wire 5 with high precision, and welding can be stabilized.

Though embodiments of the present invention are described above in reference to the drawings, the concrete configuration of the invention is not limited to these embodiments, and modifications and additions that do not deviate from the scope of the present invention are included in the present invention.

For example, though in the embodiments the tin plating layer 2 is formed over the entire surface of the metal wire 1 and the tin plating layer 2 is removed through a mechanical means so that a portion having no tin plating layer 9 is formed, a portion having no tin plating layer 9 may be formed on the metal wire 1 by removing the tin plating layer 2 using a mask or the like.

In addition, though a mechanical means, such as a cutter 8, is used as the means for removing the tin plating layer 2 in the embodiments, the means is not limited to this, and a solvent or irradiation with a laser may be used for the removal.

In addition, though a tin plating layer 2 made of 100 % tin is formed around the metal wire 1 in the embodiments, it is not necessary to form the plating layer 100 % from the same metal, and the plating layer may be formed of an alloy of such metals as bismuth and tin, for example.

In addition, though a soft steel wire is used as a core for the metal wire 1 in the embodiments, a copper wire may also be used. In this case, a tin plating layer 2 can be formed directly on the metal wire 1 made of a copper wire (core).

In addition, though the aluminum wire 5 is held by a fixed chuck and the metal wire 1 is held by a movable chuck in the embodiments, the invention is not limited to this, and the metal wire 1 may be held by a fixed chuck and the aluminum wire 5 by a movable chuck, so that the aluminum wire 5 held by the movable chuck can be moved against the metal wire 1 for welding.

In addition, though in the embodiments, a welding current flows in such a state that the metal wire 1 makes contact with the aluminum wire 5 (or the aluminum wire a makes contact with the mental wire 1) in the are welding method, and after that the end of the metal wire 1 is moved away from the end surface of the aluminum wire 5 so that an arc is generated between the two and part of both the metal wire 1 and the facing aluminum wire 5 melts, and then the metal wire 1 is moved against the end surface of the aluminum wire 5 (or the aluminum wire 5 is moved against the metal wire 1) and makes contact, and the two are further pressed together each other so that the melted metals fuse together and the metal wire 1 and the aluminum wire 5 are welded together, the invention is not limited to this, and a welding current flows in such a state that the metal wire 1 makes contact with the aluminum wire 5 (or the aluminum wire 5 makes contact with the metal wire 1), so that an arc is generated in this state and part of both the metal wire 1 and the aluminum wire 5 melts, and the metal wire 1 is further pressed against the aluminum wire (or the aluminum wire 5 is pressed against the metal wire 1), and thus, the melted metals fuse together, and the metal wire 1 and the aluminum wire 5 are welded together.

In addition, though the mold portions 14a of the movable chuck 14 are positioned so as to cover the portion having no tin plating layer 9 of the metal wire 5 in the embodiments, the invention is not limited to this, and the movable chuck may be provided on the tin plating layer 1 on the metal layer 5.

In addition, though a tapered surface 11 is formed at the end and the end of the metal wire 1 on which a tin plating portion 2b is provided is inserted into the recess 12 created in the aluminum wire 5 in the configuration of the third embodiment, the end of a metal wire 1 where no tapered surface 11 is formed at the end or a metal wire 1 where no tin plating portion 2b is provided at the end may be inserted into the recess 12 created in the aluminum wire 5.

In addition, though the metal wire 1 has no tapered surface 11 at the end and the aluminum wire 5 has no recess 12 in the first and second embodiments, the invention is not limited to this, and a tapered surface 11 may be formed at the end of the metal wire 1, so that the end can be inserted into a recess created in the aluminum wire 5, as in the third embodiment.

## Claims

1. A process for manufacturing a lead terminal for a capacitor in which a metal wire on which a metal plating layer is formed mainly of tin and an aluminum wire are put in contact with each other and said metal wire and aluminum wire are arc welded to each other, **characterized in that**
a portion having no metal plating layer is provided at one end of said metal wire, and the end of the metal wire and an end of said aluminum wire are put in contact with each other, and thus, said arc welding is carried out.

2. A process for manufacturing a lead terminal for a capacitor in which a metal wire on which a metal plating layer is formed mainly of tin and an aluminum wire are put in contact with each other and said metal wire and aluminum wire are arc welded to each other, **characterized in that**
the metal plating layer and a portion having no metal plating layer are continuous at one end of said metal wire, the end of the metal wire and an end of said aluminum wire are put in contact with each other, and said arc welding is carried out.

3. The process for manufacturing a lead terminal for a capacitor according to Claim 1 or 2, **characterized in that** the metal plating layer provided at one end of said metal wire is coated with a welded portion formed through said arc welding.

4. The process for manufacturing a lead terminal for a capacitor according to any of Claims 1 to 3, **characterized in that** the welded portion between said metal wire and aluminum wire does not stick out over the portion having no metal plating layer on the metal wire.

5. The process for manufacturing a lead terminal for a capacitor according to any of Claims 1 to 4, **characterized in that** said metal wire has a tapered surface formed toward an end.

6. The process for manufacturing a lead terminal for a capacitor according to any of Claims 1 to 5, **characterized in that** a recess is provided on the surface at one end of said aluminum wire and the metal wire is put in contact within the recess.

7. The process for manufacturing a lead terminal for a capacitor according to any of Claims 1 to 6, **characterized in that** the welded portion between the metal wire and the aluminum wire is made into a desired form using a die when said arc welding is carried out.

8. The process for manufacturing a lead terminal for a capacitor according to Claim 7, **characterized in that** said die is provided in the chuck for holding said metal wire.

9. The process for manufacturing a lead terminal for a capacitor according to Claim 1, **characterized in that** the welded portion between the metal wire and the aluminum wire is made into a desired form using a die when said arc welding is carried out, and said die is provided so as to cover said portion having no metal plating layer, so that the welded portion formed through said arc welding and said metal plating layer are separated from each other by means of the die.
